# EUROPEAN PATENT APPLICATION

(11) **EP 2 509 010 A1**
(43) Date of publication of application: **10.10.2012**
(21) Application number: 12162940.6
(22) Date of filing: 03.04.2012
(51) Int. Cl.: G06F 17/50

(54) **Computerized device to provide forecast data relating to the electricity production of a photovoltaic system**

(30) Priority: 07.04.2011 IT BG20110011
(71) Applicant: ABB S.p.A., 20124 Milano (IT)
(72) Inventor: Nani, Gabriele, I-17100 Savona (IT); Fiscina, Marco, I-16156 Genova (IT); Sedda, Roberto, I-17024 San Bernardino, Finale Ligure (SV) (IT)
(74) Representative: Giavarini, Francesco

(57) **Abstract**

The invention relates to a computerized device to supply forecast data related to the electricity production of a photovoltaic system.

The device according to the invention comprises:
- at least one data processing unit;
- a database for managing and storing data and information received and processed by said computerized device;
- first computerized means adapted to receive as input and process at least first information related to the effective operating conditions of said photovoltaic system and second information related to the weather conditions forecast for the site of said photovoltaic system;
- second computerized means adapted to receive at least first data related to the weather conditions forecast for the site of said photovoltaic system and second data related to the topology of said photovoltaic system, said second computerized means processing said first and second data by means of a calculation engine of analytic type to supply first forecast data related to the electricity production of said photovoltaic system;
- third computerized means adapted to receive at least third data related to the weather conditions forecast for the site of said photovoltaic system, said second computerized means processing said third data by means of a calculation engine of adaptive type to supply second forecast data related to the electricity production of said photovoltaic system.

## Description

The present invention relates to the field of photovoltaic systems for producing electricity. More in particular, the present invention relates to a computerized device for supplying forecast data relating to the electricity production of a photovoltaic system.

It is known that the electricity production of a photovoltaic system varies significantly over time, being influenced by several environmental factors, such as the sun exposure conditions and/or weather conditions at the site of the photovoltaic system.

In the case of photovoltaic systems with relatively high electricity production capacities, for example exceeding 200 kW, these fluctuations in the power generated can have a significant impact with regard to operational management of the electricity distribution network to which the photovoltaic system is connected.

For these reasons, the manager of the photovoltaic system is generally required to supply data related to the forecast electricity production for a predefined time interval, for example the subsequent 24h.

Moreover, according to the laws in some countries, including Italy, the operator of the photovoltaic system can only obtain significant economic incentives if it is able to provide these forecast data with a minimum pre-established accuracy.

Also in the case of photovoltaic systems that are not connected to an electricity distribution network, the fluctuations of electric power generated can cause damage to the electrical systems and appliances supplied by the photovoltaic system.

Therefore, in general, the operator of a photovoltaic system requires to provide a sufficiently accurate forecast of the electricity produced by the system for a given period of time, for example the subsequent 24h.

Unfortunately, methods and systems for providing forecast data related to the electricity production of a photovoltaic system that are currently available have considerable limits in terms of reliability and accuracy.

Generally, calculation models are used based mainly on the analysis of weather forecast data and on historical series of weather data related to the site of the system and typically unable to take account of the effective operating conditions of the photovoltaic system, both with regard to operability of the equipment of the system and with regard to the effective weather or solar radiation conditions at the site of the system.

In the management of photovoltaic systems, in particular if of relatively large dimensions, there is great need for improved instruments to obtain forecast data related to the electricity production of the system.

The main aim of the present invention is to provide a computerized device for processing forecast data related to the electricity production of a photovoltaic system that is able to overcome the aforesaid drawbacks.

Within this aim, an object of the present invention is to provide a computerized device characterized by a high level of reliability and accuracy of the forecast data supplied.

A further aim of the present invention is to provide a computerized device whose practical use is relatively easy, above all in the case of isolated photovoltaic systems.

A further aim of the present invention is to provide a computerized device that can be easily integrated in a control device of a photovoltaic system, so that the forecast data supplied can be used to adjust the operating configuration of said photovoltaic system.

Yet another aim of the present invention is to provide a computerized device which is relatively easy to manufacture at competitive costs.

These aims, and said and other objects that shall be more apparent below, are obtained through a computerized device according to claim 1, proposed below.

According to a general definition, the computerized device according to the invention comprises:
- at least one data processing unit;
- a database for managing and storing data and information;
- first computerized means adapted to receive and process at least first information related to the effective operating conditions of said photovoltaic system and second information related to the weather conditions forecast for the site of said photovoltaic system;
- second computerized means adapted to receive at least first data related to the weather conditions forecast for the site of said photovoltaic system and second data related to the topology of said photovoltaic system, said second computerized means processing said first and second data by means of a first calculation engine, of analytic type, to supply first forecast data related to the electricity production of said photovoltaic system;
- third computerized means adapted to receive at least third data related to the weather conditions forecast for the site of said photovoltaic system, said third computerized means processing said third data by means of a second calculation engine, of adaptive type, to supply second forecast data related to the electricity production of said photovoltaic system.

According to a preferred embodiment of the computerized device according to the invention, the aforesaid third computerized means use the first forecast data supplied by the second computerized means to train the aforesaid second calculation engine.

Preferably, moreover, the second calculation engine is a neural network.

According to a preferred embodiment, the computerized device according to the invention is capable of communicating, for example by means of a digital communication network, with a data acquisition device of the photovoltaic system. In this way, the first computerized means are capable of automatically receiving the aforesaid first information, directly from this data acquisition device.

According to another preferred embodiment, the computerized device according to the invention is capable of communicating with a first remote computerized unit, so that the first computerized means are capable of automatically receiving the information related to the weather conditions forecast for the site of the photovoltaic system.

In a further preferred embodiment, the computerized device according to the invention comprises a second computerized unit capable of remotely accessing the data stored in the database of the computerized device, for example by means of a digital communication browser, and capable of processing the forecast data supplied by the aforesaid second and third computerized means.

Preferably, moreover, the aforesaid second remote computerized unit is capable of communicating with a third remote computerized unit to transmit to this latter forecast data thus processed.

Further characteristics and advantages of the present invention will be more apparent with reference to the description given below and to the accompanying figures, provided purely for explanatory and non-limiting purposes, wherein:

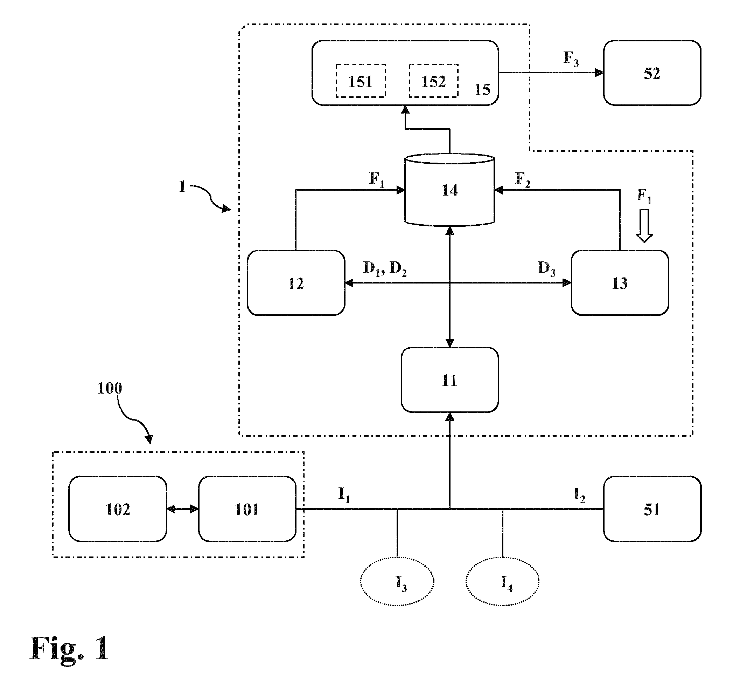

- Fig. 1 schematically shows the structure of the computerized device according to the present invention;
- Fig. 2 schematically shows the structure of a portion of the computerized device according to the present invention;
- Fig. 3 schematically shows the structure of a further portion of the computerized device according to the present invention;
- Fig. 4 schematically shows the structure of a further portion of the computerized device according to the present invention.

With reference to the aforesaid figures, the present invention relates to a computerized device 1 for processing forecast data related to the electricity production of a photovoltaic system 100 for a time period of interest, for example the subsequent 24h.

The photovoltaic system 100 advantageously comprises one or more solar panels 102, advantageously organized according to serial strings connected in parallel to one another. Preferably, the photovoltaic system 1 is provided with a data acquisition device 101 capable of detecting data and information related to operation of the same system, for example a SCADA (Supervisory And Control Data Acquisition) system,

Preferably, the data acquisition device 101 also comprises a weather detection station (not shown) capable of supplying information on the effective weather conditions at the site of the system 100.

In principle, the production capacity of the system 100 can be any.

Preferably, the photovoltaic system 100 is capable of supplying electric power between 200kW and 10MW.

The computerized device 1 comprises a database 14 for managing and storing data and information and one or more data processing units (not shown), for example one or more microprocessors.

Preferably, the database 14 is a database of relational type, for example an SQL (Structured Query Language) database or the like.

The computerized device 1 advantageously comprises first computerized means 11, second computerized means 12 and third computerized means 13.

The term "computerized means" is intended within the context of the present description, as one or more programs, procedures or software modules, stored in the computerized device 1 and executable by one or more processing units.

The computerized means 11-13 and the database 14 can by physically distanced in one or more servers operatively associated with one another.

The first computerized means 11 are adapted to receive as input and process at least first information I₁ and second information I₂.

The first information I₁ is related to the effective operating conditions of the photovoltaic system 100.

This information comprises data related to the effective operation of the solar panels of the system 100, such as electric power generated, temperature, light radiation received, reflected light radiation, and the like.

The information I₁ advantageously also comprises data related to the effective weather conditions at the site of the system 100.

According to an embodiment of the present invention, particularly advantageous in the case in which the photovoltaic system 100 is located in an isolated site, the computerized device 1 is arranged so as to be capable of communicating with the data acquisition device 101 of the photovoltaic system, for example by means of a digital communication network, wired or wireless.

In this way, the first computerized means 11 are capable of automatically receiving the information I₁, directly from the data acquisition device 101.

The second information I₂ is related to the forecast weather conditions, with regard to the time period of interest, for the site of the photovoltaic system 100.

Preferably, the computerized device 1 is capable of communicating with a first remote computerized unit 51, for example by means of a digital communication network, wired or wireless.

The computerized unit 51 is advantageously managed by the body appointed to supply data related to the weather forecast, for example the weather forecast service used by the operator of the system 100.

In this way, the first computerized means 11 are capable of receiving, in real time and automatically, the information I₂.

Preferably, the computerized means 11 are adapted to receive and process also third information I₃, related to the topology of the photovoltaic system 100, and fourth information I₄, related to the historical trend of the operating conditions of the site of the photovoltaic system 100, for example the historical trend of the weather conditions at the site of the same system.

The information I₃ and I₄ can advantageously be stored in the database 14 by an operator by means of suitable user interface (not shown).

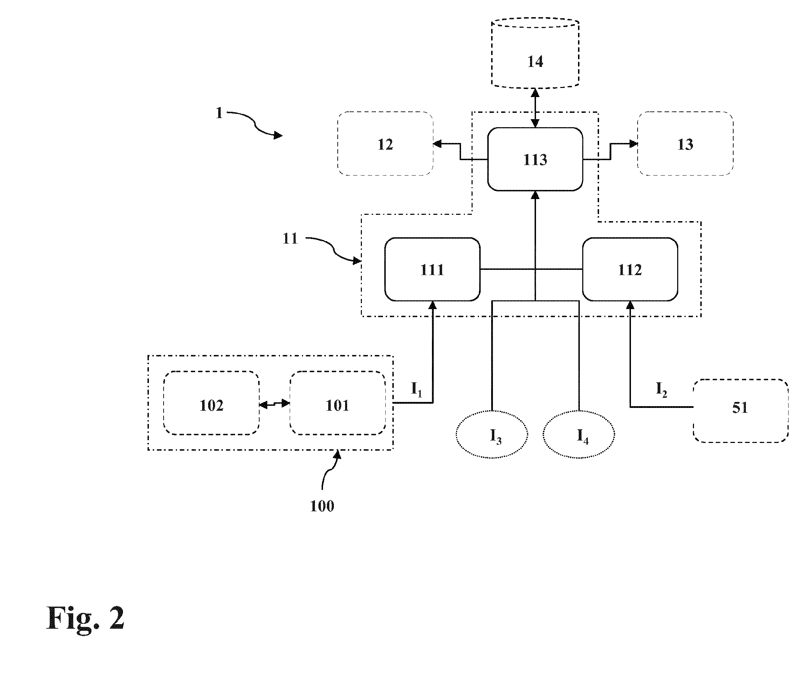

According to a preferred embodiment of the present invention, the computerized means 11 comprise a first software module 111, for example a "data loader" program, and a second software module 112, for example a "data manager" program (Fig. 2).

The software modules 111 and 112 are adapted to manage reception of the information 11 and I₂, respectively, and to store these in the database 14, in a suitable format.

Preferably, moreover, the computerized means 11 comprise a software module 113 adapted to process the data and information received as input from the device 1 or stored or to be stored in the database 14.

The software module 113 can advantageously comprise a program for the execution of data or information validation and comparison procedures, for example to verify correspondence between the forecast data received by the computerized unit 51 and the data effectively detected by the data acquisition system 101.

The computerized device 1 comprises second computerized means 12 adapted to receive as input at least first data D₁ related to the weather conditions forecast for the site of the photovoltaic system 100 and second data D₂ related to the topology of the aforesaid system. The computerized means 12 can advantageously receive the input data D₁ and D₂ from the computerized means 11 and/or from the database 14.

The computerized means 12 are capable of processing the input data D₁ and D₂ to supply as output first forecast data F₁ related to the electricity production of the photovoltaic system 100, with reference to a time period of interest, for example the subsequent 24h.

The forecast data F₁ can comprise, for example, data related to the trend, on an hourly basis, of the electricity generated by the photovoltaic system 100 for the subsequent 24h.

To process the input data D₁ and D₂, the computerized means 12 advantageously use a first calculation engine 120, of analytic type.

The calculation engine 120 is based on several predefined mathematical functions adapted to describe in an analytic manner the main functions of the photovoltaic system 100.

The calculation engine 120 is therefore advantageously based on a mathematical model of the photovoltaic system 100 which intends to "physically" describe the functions using functional blocks each characterized by a pre-established transfer function to represent the relations between inputs and outputs.

The transfer functions used for the aforesaid functional blocks are not modifiable on the basis of the data received as input or processed by the calculation engine. The calculation engine 120 is therefore not capable of adapting its calculation structure as a consequence of data or information received as input or processed.

According to a preferred embodiment, the calculation engine 120 comprises a plurality of software modules 121-127 interacting with one another.

Each software module comprises a set of instructions to implement the functions of a corresponding functional block of the photovoltaic system 100.

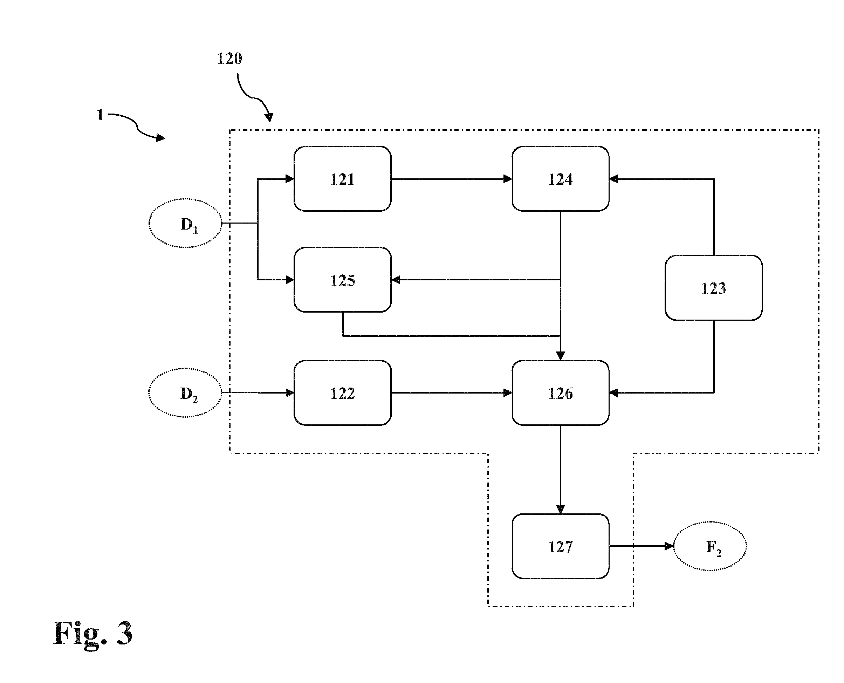

In more detail, the calculation engine 120 comprises (Fig. 3):
- a fourth software module 121 to calculate data indicative of the quantity of solar radiation received by the panels 102 of the photovoltaic system 100. The software module 121 receives data indicative of the weather conditions forecast for the site of the photovoltaic system, for example forecast data related to the solar radiation incident on a predefined reference plane, supplied by the remote computerized unit 51 (weather forecast service) and stored in the database 14 by the software modules 112 and 113;
- a fifth software module 122 to calculate data indicative of the percentage of shaded surface of the solar panels of the photovoltaic system 100. The software module 122 receives as input data indicative of the horizon profile and of the shading profile for the site of the photovoltaic system 100. The data received as input by the software module 122 are advantageously included in the information I₃ loaded into the database 14;
- a sixth software module 123 to calculate data indicative of the position of the sun relative to the panels of the photovoltaic system 100. This module acquires data indicative of the position of the site of the photovoltaic system, such as longitude, latitude, altitude, etc., and calculates data indicative of the relative position of the sun, such as elevation, declination, azimuth etc.;
- a seventh software module 124 to calculate data indicative of the quantity of solar radiation reflected by the panels of the photovoltaic system 100. The software module 124 receives as input the data supplied as output by the software modules 121 and 123;
- an eighth software module 125 to calculate data indicative of the temperature of the panels of the photovoltaic system 100. The software module 125 receives data indicative of the weather conditions forecast for the site of the photovoltaic system 100, for example forecast data relating to temperature, wind speed, wind direction, supplied by the remote computerized unit 51 (weather forecast service) and stored in the database 14 by the software modules 112 and 113;
- a ninth software module 126 to calculate data indicative of the direct current electric power generated by the panels of the photovoltaic system 100. On the basis of the data supplied by the software modules 122-125, the software module 126 calculates the operating curves of the inverters, associated with the solar panels, as a function of some predefined parameters, such as temperature, incident radiation, etc.;
- a tenth software module 127 to calculate data indicative of the alternating current electric power generated by the panels of the photovoltaic system 100, on the basis of the data supplied by the software module 126 and of data indicative of the output of the inverters associated with the solar panels.

The computerized device 1 also comprises third computerized means 13 adapted to receive as input at least third data D₃ related to the weather conditions forecast for the site of the photovoltaic system 100, with reference to a time period of interest, for example the subsequent 24h.

The computerized means 13 can advantageously receive the input data D₃ from the computerized means 11 and/or from the database 14.

The computerized means 13 are capable of processing the input data D₃ to supply as output second forecast data F₂ related to the electricity production of the photovoltaic system 100. The forecast data F₂ can comprise, for example, data related to the trend, on an hourly basis, of the electricity generated by the photovoltaic system 100 for the subsequent 24h.

For this purpose, the computerized means 13 use a calculation engine of adaptive type, preferably a neural network, in particular a neural network of feedforward type.

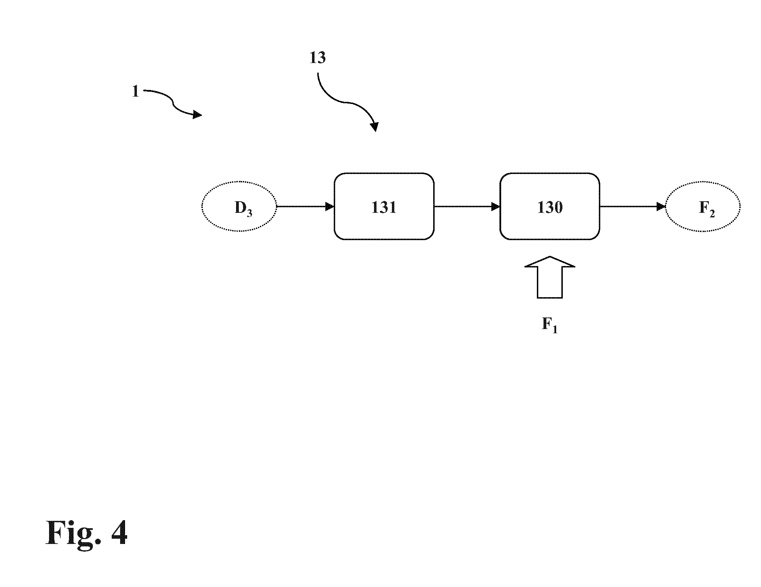

Preferably, the computerized means 13 comprise an eleventh software module 131 adapted to receive and process the input data D₃ before sending them to the calculation engine 130 so that the data D3 are in a format suitable for the calculation engine 130 (Fig. 4).

Preferably, the neural network of the calculation engine 130 comprises a plurality of nonlinear computational elements (nodes) which operate in parallel and are organized in several levels.

The data sent to calculation engine 130, comprising, for example, forecast data related to weather situation and position of the sun, are received and processed by a layer of input nodes, each of which is connected to numerous internal nodes, organized in several successive layers. Each node of the neural network processes the data received from the nodes upstream and transmits the result to the nodes downstream (with reference to the customary flow of data between input and output).

The neural network of the engine 130 preferably comprises at least one output node adapted to supply the forecast data F₂.

The calculation engine 130 is a calculation structure of adaptive type, i.e. capable of changing its structure on the basis of data received as input or processed internally.

For its adjustment, the calculation engine 130 requires continuous training phases, during which sets of data of know type are used, for example predefined input and output data.

The parameters of the calculation engine 130, for example the weights of the nodes of the neural network, are modified by means of appropriate algorithms, for example backpropagation algorithms, so as to minimize the error between the output data produced by the calculation engine and the output data of known type used for training.

According to a preferred embodiment of the present invention, the third computerized means 13 use the first forecast data F₁, supplied by the second computerized means 12, to train the neural calculation engine 130.

The use of several calculation engines, based on computational models of different kind, has considerable advantages with regard to the reliability and accuracy of the forecast data supplied by the computerized device 1.

In fact, with this solution it is possible to obtain redundant forecast data, which can be compared with one another and/or selected, time by time, according to the requirements or the operability status of the computerized device 1.

For example, in an initial phase of the operating view of the computerized device 1, the forecast data F₁, supplied by the calculation engine 120, can be considered more reliable, given that the calculation engine 120 does not require any training phase and the precision of the forecast data F₁ supplied depends only on the accuracy of the analytic calculation model adopted to represent the functions of the photovoltaic system 100.

In a more advanced phase of the operating life of the computerized device 1, after adequate training of the calculation engine 130, the operator of the system can instead adopt the forecast data F₂, supplied by the calculation engine 130, so as to be able to make full use of the computational powers of this latter thanks to the neural calculation.

The forecast data F₁, supplied by the calculation engine 120, can in any case be used to validate the forecast data F₂, supplied by the calculation engine 130, or to train the calculation engine 130 further.

Preferably, the computerized device 1 comprises a second computerized unit 15, preferably un web server, capable of remotely accessing the database 14, for example by means of a communication browser 152 capable of communicating with the database 14 through a digital communication network, wired or wireless.

The computerized unit 15 comprises fourth computerized means 151, preferably a software application, to acquire and process the data and the information stored in the database 14, in particular the forecast data F₁ and F₂ supplied by the computerized means 12 and 13, in order to supply as output third forecast data F₃ related to the electricity production of the photovoltaic system 100.

Advantageously, the computerized unit 15 is capable of communicating with a third remote computerized unit 53 so as to sent to this latter the forecast data F₃ thus processed.

The solution described above has considerable operating advantages.

The operator of the photovoltaic system 100 can advantageously use the computerized unit 15 to process the data stored in the database 14 and supply the network operator (computerized unit 53) with the forecast data required in a suitable format.

It must be noted that the forecast data processed by the computerized device 1 can advantageously be used to make appropriate adjustments to the operating configuration of the photovoltaic system 1.

In fact, the forecast data F₁ and F₂ can be used directly by a control system of the photovoltaic system 100, for example by a SCADA system, to modify the operating configuration of the components of the same system, for example the position of the solar panels, the operating configuration of the inverters and so forth.

For example, in the case in which the data processed by the computerized device 1 forecast a significant drop in electricity production in the subsequent 24h, relative to a predefined optimal level, the control system can modify the operating configuration of the panels to increase their output.

Vice versa, in the case in which surplus production is forecast, the control system can control a series of controlled interruptions from the electricity network to be able to best satisfy the production profile agreed with the operator of the electricity distribution network.

The computerized device 1 can be easily integrated in the structure of a photovoltaic system. In this case, it can communicate with the data acquisition and/or control device, for example the SCADA system, by means of a dedicated LAN. Communication between the computerized unit 51 and the computerized device 1 can take place via the Internet, as can communication between the computerized unit 52 and the database 14.

In a further aspect thereof, the present invention relates to a method for supplying forecast data related to the electricity production of a photovoltaic system 100.

The method according to the invention comprises the steps of:
- receiving and processing at least the first information I₁ related to the effective operating conditions of said photovoltaic system and the second information I₂ related to the weather conditions forecast for the site of said photovoltaic system;
- receiving and processing the first data D₁ related to the weather conditions forecast for the site of said photovoltaic system and second data D₂ related to the topology of said photovoltaic system using a first calculation engine 120, of analytic type, to supply the first forecast data F₁;
- receiving and processing the third data D₃ related to the weather conditions forecast for the site of said photovoltaic system using a second calculation engine 130, of adaptive type, to supply the second forecast data F₂.

In a preferred embodiment, the method according to the invention comprises the further step of using the first forecast data F₁ to train the second calculation engine 130, preferably comprising a neural network.

The computerized device 1 according to the invention enables the foregoing aims and the objects to be fully accomplished.

The simultaneous use of an analytic calculation engine and an adaptive calculation engine makes it possible to obtain, constantly in time, a high level of reliability and accuracy in formulation of the forecast data related to the electricity production of the photovoltaic system.

The computerized device according to the invention is simple to produce and practical to use. It can be easily used to manage photovoltaic systems already operating or newly built systems and can be employed as a valid instrument to test the operating performance of a photovoltaic system.

The computerized device according to the invention is simple to integrate in control devices for photovoltaic systems and enables effective and rapid processing of the data to be supplied to the electricity network operator.

Finally, the computerized device according to the invention has proved to be relatively easy to produce at relatively competitive costs.

## Claims

1. A computerized device (1) to supply forecast data related to the electricity production of a photovoltaic system (100) **characterized in that** it comprises:
- at least one data processing unit;
- a database (14) for managing and storing data and information;
- first computerized means (11) adapted to receive and process at least first information (I₁) related to the effective operating conditions of said photovoltaic system and second information (I₂) related to the weather conditions forecast for the site of said photovoltaic system;
- second computerized means (12) adapted to receive at least first data (D₁) related to the weather conditions forecast for the site of said photovoltaic system and second data (D₂) related to the topology of said photovoltaic system, said second computerized means processing said first and second data (D₁, D₂) by means of a first calculation engine, of analytic type, to supply first forecast data (F₁) related to the electricity production of said photovoltaic system;
- third computerized means (13) adapted to receive at least third data (D₃) related to the weather conditions forecast for the site of said photovoltaic system, said third computerized means processing said third data (D₃) by means of a second calculation engine (130), of adaptive type, to supply second forecast data (F₂) related to the electricity production of said photovoltaic system.

2. The computerized device according to claim 1, **characterized in that** said third computerized means use the first forecast data (F₁), supplied by said second computerized means, to train said second calculation engine.

3. The computerized device according to one or more of the preceding claims, **characterized in that** said second calculation engine is a neural network.

4. The computerized device according to one or more of the preceding claims, **characterized in that** it is capable of communicating with a data acquisition device (101) of said photovoltaic system, said first computerized means receiving said first information (I₁) from said data acquisition device.

5. The computerized device according to one or more of the preceding claims, **characterized in that** it is capable of communicating with a first remote computerized unit (51), said first computerized means receiving said second information (I₂) from said first computerized unit.

6. The computerized device according to one or more of the preceding claims, **characterized in that** it comprises a second computerized unit (52) capable of remotely accessing said database (14).

7. The computerized device according to claim 6, **characterized in that** said second computerized unit (52) comprises fourth computerized means (521) adapted to process the data and information stored in said database (14) to supply as output third forecast data (F₃) related to the electricity production of said photovoltaic system.

8. The computerized device, according to one or more of claims 6 to 7, **characterized in that** said second computerized unit is capable of communicating with a third remote computerized unit (53) to send said third forecast data (F₃) to said third computerized unit.

9. A control device for a photovoltaic system (100) **characterized in that** it comprises a computerized device (1) according to one or more of the preceding claims.

10. A photovoltaic system (100) **characterized in that** it comprises a computerized device (1) according to one or more of claims 1 to 8.

11. A method for supplying forecast data related to the electricity production of a photovoltaic system (100) **characterized in that** it comprises the steps of:
- receiving and processing at least first information (I₁) related to the effective operating conditions of said photovoltaic system and second information (I₂) related to the weather conditions forecast for the site of said photovoltaic system;
- receiving and processing first data (D₁) related to the weather conditions forecast for the site of said photovoltaic system and second data (D₂) related to the topology of said photovoltaic system using a first calculation engine (120), of analytic type, to supply first forecast data(F₁) related to the electricity production of said photovoltaic system;
- receiving and processing third data (D₃) related to the weather conditions forecast for the site of said photovoltaic system using a second neural calculation engine (130), of adaptive type, to supply second forecast data (F₂) related to the electricity production of said photovoltaic system.

12. The method according to claim 11, **characterized in that** it comprises the further step of using said first forecast data (F₁) to train said second calculation engine.

13. The method according to one or more of claims 11 to 12, **characterized in that** said second calculation engine is neural network.
